# EUROPÄISCHE PATENTSCHRIFT

(11) **EP 3 683 069 B1**
(45) Veröffentlichungstag und Bekanntmachung des Hinweises auf die Patenterteilung: **15.09.2021**
(21) Anmeldenummer: 19206820.3
(22) Anmeldetag: 04.11.2019
(51) Int. Cl.: B60C 11/03, B60C 11/13

(54) **FAHRZEUGLUFTREIFEN**
PNEUMATIC TIRE
PNEUMATIQUE

(30) Priorität: 16.01.2019 DE 102019200438
(43) Veröffentlichungstag der Anmeldung: 22.07.2020
(73) Patentinhaber: Continental Reifen Deutschland GmbH, 30165 Hannover (DE)
(72) Erfinder: Bosse, Stefan, 30419 Hannover (DE); Schlittenhard, Jan, 30419 Hannover (DE)
(74) Vertreter: Continental Corporation

(56) Entgegenhaltungen:
- EP-A1- 1 213 160
- EP-A1- 1 637 357
- EP-A1- 2 340 949
- EP-A2- 1 216 853
- DE-A1-102008 037 497
- US-A1- 2008 185 084

## Beschreibung

Die Erfindung betrifft einen Fahrzeugluftreifen mit einem laufrichtungsgebunden ausgeführten Laufstreifen mit zumindest einer an einer Seite von einer Umfangsrille begrenzten schulterseitigen Profilrippe, welche durch eine Vielzahl von parallel zueinander verlaufenden, in die Umfangsrille einmündenden Querrillen und/oder Schrägrillen in Profilblöcke gegliedert ist, welche an der Umfangsrille jeweils durch eine Blockflanke mit einem beim Abrollen des Reifens bei Vorwärtsfahrt zuerst in den Untergrund eintretenden, einlaufenden Ende und einem auslaufenden Ende begrenzt sind,
wobei sich die Blockflanke, im Querschnitt und in radialer Richtung betrachtet, entweder in einem einzigen Umfangsabschnitt aus einem radial inneren Flankenabschnitt und einem radial äußeren Flankenabschnitt zusammensetzt oder in zwei übereinstimmend ausgeführten Umfangsabschnitten jeweils aus einem radial inneren Flankenabschnitt und einem radial äußeren Flankenabschnitt zusammensetzt oder über ihre gesamte Umfangserstreckung aus einem radial inneren Flankenabschnitt und einem radial äußeren Flankenabschnitt zusammensetzt,
wobei der radial innere Flankenabschnitt zur radialen Richtung unter einem konstanten Winkel von 0° bis 7° verläuft und der radial äußere Flankenabschnitt zur radialen Richtung unter einem konstanten Winkel von 40° bis 60° verläuft,
wobei der radial äußere Flankenabschnitt eine über seine Umfangserstreckung kontinuierlich zunehmende Breite aufweist.

Ein derartiger Fahrzeugluftreifen ist beispielsweise aus der EP 1 637 357 A1 bekannt. Der Fahrzeugluftreifen weist einen laufrichtungsgebunden ausgeführten Laufstreifen auf, welcher in jeder Laufstreifenhälfte eine schulterseitige und eine mittlere Profilrippe mit Profilblöcken aufweist, wobei die schulterseitige Profilrippe von der mittleren Profilrippe durch eine schulterseitige Umfangsrille mit einem in Draufsicht zick-zack-förmig verlaufenden Rillengrund getrennt ist. In jeder Laufstreifenhälfte sind in Draufsicht bogenförmig verlaufende Querrillen ausgebildet, welche sich sowohl über die mittlere Profilrippe als auch über die schulterseitige Profilrippe erstrecken, wobei die Querrillen in der einen Laufstreifenhälfte bezüglich der axialen Richtung gegensinnig zu den Querrillen in der anderen Laufstreifenhälfte verlaufen. Die Abrollrichtung ist in an sich bekannter Weise gewählt, sodass die laufstreifeninnenseitigen Enden der Querrillen zuerst in den Untergrund eintreten. Bei einigen Ausführungsformen setzen sich die an den Querrillen liegenden Blockflanken der Profilblöcke der schulterseitigen und der mittleren Profilrippe, im Querschnitt und in radialer Richtung betrachtet, aus einem radial inneren, in radialer Richtung verlaufenden Flankenabschnitt und einem radial äußeren, zur radialen Richtung unter einem konstanten Winkel von 15° bis 80°, beispielsweise von 45°, verlaufenden Flankenabschnitt zusammen. Die radial äußeren Flankenabschnitte der Blockflanken weisen eine über die Umfangserstreckung der jeweiligen Blockflanke kontinuierlich zunehmende Breite auf, wobei die Breite des radial äußeren Flankenabschnittes der einen Blockflanke in entgegengesetzter Umfangsrichtung zur Breite des radialen äußeren Flankenabschnittes der jeweils gegenüberliegenden Blockflanke zunimmt. Bei sämtlichen Ausführungsbeispielen nimmt bei den Blockflanken der Profilblöcke der schulterseitigen Profilrippe die Breite des radial äußeren Flankenabschnittes über seine Umfangserstreckung in Richtung zum auslaufenden Ende der Blockflanke kontinuierlich ab. Die getroffenen Maßnahmen sollen gute Wasserdrainage- und gute Abriebeigenschaften ermöglichen sowie dazu beitragen, die Gefahr des Untersteuerns des Fahrzeuges zu reduzieren.

Aus der EP 1 213 160 A1 ist ein Fahrzeugluftreifen mit einem Laufstreifen mit zumindest einer Umfangsrille, welche zu zwei Profilblockreihen gehörende Profilböcke in axialer Richtung voneinander trennt, bekannt. In jedem Profilblock ist an der Laufstreifenperipherie, an die Umfangsrille angrenzend, eine in Umfangsrichtung vorzugsweise langgestreckte Fase ausgebildet, welche von ihrem mittleren Bereich zu ihren in den Umfangsrichtungen liegenden Enden kontinuierlich schmäler wird. Im Bereich der Fase weist die an der Umfangsrille liegende Blockflanke des jeweiligen Profilblockes einen Umfangsabschnitt auf, in welchem sich die Blockflanke aus einem radial inneren, in radialer Richtung verlaufenden Flankenabschnitt und einem gegenüber diesem zur radialen Richtung stärker geneigten, radial äußeren Flankenabschnitt zusammensetzt. Die getroffenen Maßnahmen sollen dazu beitragen, die Gefahr zu reduzieren, dass sich das Fahrzeug bei einem Unfall mit hoher Geschwindigkeit überschlägt.

Aus der EP 2 340 949 A1 ist ein Fahrzeugluftreifen mit einem bevorzugt asymmetrisch ausgeführten Laufstreifen mit einer schulterseitigen Profilblockreihe, welche durch eine in Draufsicht zick-zack-förmig verlaufende schulterseitige Umfangsrille von einer Profilrippe getrennt ist, bekannt. In der schulterseitigen Profilblockreihe verläuft eine Vielzahl von Querrillen, welche an den laufstreifenaußenseitigen Knickstellen der schulterseitigen Umfangsrille in diese einmünden. Jeder Profilblock der schulterseitigen Profilblockreihe ist an der Umfangsrille durch eine Blockflanke begrenzt, welche, entsprechend des zick-zackförmigen Verlaufes der schulterseitigen Umfangsrille, über eine der laufstreifeninnenseitigen Knickstellen verläuft und sich aus einem radial inneren, in radialer Richtung verlaufenden Flankenabschnitt und einen radial äußeren, zur radialen Richtung geneigten Flankenabschnitt zusammensetzt. Der radial innere Flankenabschnitt verläuft, im Querschnitt betrachtet, zur radialen Richtung unter einem konstanten Winkel. Die Breite des radial inneren Flankenabschnittes nimmt von der laufstreifenaußenseitigen Knickstelle zur laufstreifeninnenseitigen Knickstelle ab. Die Breite des radial äußeren Flankenabschnittes nimmt entgegengesetzt zur Breite des radial inneren Flankenabschnittes ab. Die getroffenen Maßnahmen sollen unter Nutzung der Vorteile der zick-zack-förmig verlaufenden Umfangsrille gute Aquaplaning-, Handling- und Trockenbremseigenschaften ermöglichen.

Ferner ist aus der DE 10 2008 037 497 A1 ein Fahrzeugluftreifen mit einem Laufstreifen mit einer schulterseitigen Profilrippe bekannt, welche durch Querrillen in Profilblöcke gegliedert ist. Die an der Umfangsrille befindlichen Blockflanken der Profilblöcke setzen sich aus einem radial inneren Flankenabschnitt und einem radial äußeren Flankenabschnitt zusammen. Der radial äußere Flankenabschnitt verläuft, im Querschnitt betrachtet, zur radialen Richtung unter einem sich über seine Umfangserstreckung kontinuierlich verändernden Winkel, wobei der Winkel über zwei in Umfangsrichtung aufeinanderfolgende radial äußere Flankenabschnitte, welche zu unterschiedlichen Blockflanken gehören, in einem Bereich von 25° bis 60° variiert. Der radial innere Flankenabschnitt ist mit Erhebungen versehen, welche eine gerippte Struktur bilden, welche beim Fahren auf schneebedeckter Fahrbahn das Ansammeln von Schnee in der Umfangsrille und derart den Effekt der Schnee-Schnee-Reibung unterstützt. Trotzdem kann sich die Umfangsrille unter den beim Fahren auf Schnee üblichen unterschiedlichen Belastungen nicht auf optimale Weise mit Schnee füllen.

Der Erfindung liegt somit die Aufgabe zu Grunde, bei einem Fahrzeugluftreifen der eingangs genannten Art beim Fahren auf mit Schnee bedecktem Untergrund ein schnelleres und effektiveres Füllen der Umfangsrille mit Schnee zu ermöglichen, sodass der Effekt der Schnee-Schnee-Reibung schneller bzw. in stärkerem Ausmaß als bisher auftritt.

Gelöst wird die gestellte Aufgabe erfindungsgemäß dadurch,
dass die Breite des bzw. jedes radial äußeren Flankenabschnittes der Blockflanke über seine Umfangserstreckung in Richtung zum auslaufenden Ende der Blockflanke kontinuierlich zunimmt.

Die Laufrichtungsgebundenheit des Laufstreifens ermöglicht es, die seitliche Blockflanke in einer auf die Abrollrichtung des Reifens abgestimmten und besonders vorteilhaften Weise mit geneigten Flankenabschnitten auszuführen. Beim Fahren auf schneebedeckter Fahrbahn wird unter Traktionsbelastung, also unter in Abrollrichtung bei Vorwärtsfahrt wirkender Kraft, Schnee vom breiteren auslaufenden Ende des radial äußeren Flankenabschnittes in Richtung zum schmäleren einlaufenden Ende des radial äußeren Flankenabschnittes geschoben, wodurch der Schneetransport in die Umfangsrille hinein beschleunigt wird. Die Umfangsrille füllt sich dadurch deutlich schneller mit Schnee, wobei der Schnee in der Umfangsrille zusätzlich sehr wirksam verdichtet wird. Durch den stark verdichteten Schnee wird der Effekt der Schnee-Schnee-Reibung verstärkt, wodurch die Traktionseigenschaften des Reifens auf Schnee weiter verbessert sind.

Das Ansammeln und Verdichten von Schnee in der Umfangsrille wird auf eine für die Traktionseigenschaften besonders vorteilhafte Weise beeinflusst, wenn der Winkel, unter welchem der radial äußere Flankenabschnitt verläuft, 43° bis 50° beträgt.

Gemäß einer bevorzugten Ausführungsvariante der Erfindung weist der Umfangsabschnitt, in welchem sich die Blockflanke aus dem radial inneren und dem radial äußeren Flankenabschnitt zusammensetzt, eine Länge auf, welche 50% bis 80% der Länge der Blockflanke beträgt, wobei die Längen an der Laufstreifenperipherie und in Umfangsrichtung ermittelt sind. Auch diese Maßnahme ist für ein effektives Verdichten von in der Umfangsrille eindringendem Schnee besonders vorteilhaft.

Wie bereits erwähnt, wird unter Traktionsbelastung Schnee vom breiteren auslaufenden Ende des radial äußeren Flankenabschnittes in Richtung zum schmäleren einlaufenden Ende geschoben. Ein "Transportieren" von Schnee in die Umfangsrille hinein lässt sich daher ebenfalls begünstigen, wenn, gemäß einer weiteren bevorzugten Ausführungsvariante, der radial äußere Flankenabschnitt an jenem seiner beiden in Umfangsrichtung liegenden Enden, welches sich näher zum bzw. am einlaufenden Ende der Blockflanke befindet, ausläuft.

Dabei ist es ebenfalls von Vorteil, wenn die Breite des radial äußeren Flankenabschnittes an jenem seiner beiden in Umfangsrichtung liegenden Enden, welches sich näher zum bzw. am einlaufenden Ende der Blockflanke befindet, bis zu 1,2 mm sowie insbesondere mindestens 0,8 mm beträgt.

Gemäß einer weiteren bevorzugten Variante beträgt die Breite des radial äußeren Flankenabschnittes an jenem seiner beiden in Umfangsrichtung liegenden Enden, welches sich näher zum bzw. am auslaufenden Ende der Blockflanke befindet, 2,0 mm bis 6,0 mm, insbesondere 4,5 mm bis 5,5 mm.

Weitere Merkmale, Vorteile und Einzelheiten der Erfindung werden nun anhand der Zeichnung die schematisch Ausführungsbeispiele der Erfindung zeigt, näher beschrieben. Dabei zeigen
Fig. 1 eine Draufsicht auf einen Profilblock eines Laufstreifens eines Fahrzeugluftreifens mit einer ersten Ausführungsvariante der Erfindung,
Fig. 1a einen Schnitt entlang der Linie Ia-Ia der Fig. 1,
Fig. 1b einen Schnitt entlang der Linie Ib-Ib der Fig. 1,
Fig. 1c einen Schnitt entlang der Linie Ic-Ic der Fig. 1,
Fig. 2 eine Draufsicht auf einen Profilblock eines Laufstreifens mit einer zweiten Ausführungsvariante der Erfindung,
Fig. 2a einen Schnitt entlang der Linie IIa-IIa der Fig. 2,
Fig. 2b einen Schnitt entlang der Linie IIb-IIb der Fig. 2,
Fig. 2c einen Schnitt entlang der Linie IIc-IIc der Fig. 2,
Fig. 3 eine Draufsicht auf einen Profilblock eines Laufstreifens mit einer dritten Ausführungsvariante der Erfindung,
Fig. 4 eine Draufsicht auf einen Profilblock eines Laufstreifens mit einer vierten Ausführungsvariante der Erfindung und
Fig. 5 eine Draufsicht auf einen Profilblock eines Laufstreifens mit einer fünften Ausführungsvariante der Erfindung.

Gemäß der Erfindung ausgeführte Fahrzeugluftreifen sind Reifen in Radialbauart, insbesondere für Personenkraftwagen, Vans oder Light-Trucks, wobei die Reifen insbesondere für das Fahren unter winterlichen Fahrbedingungen geeignet sind.

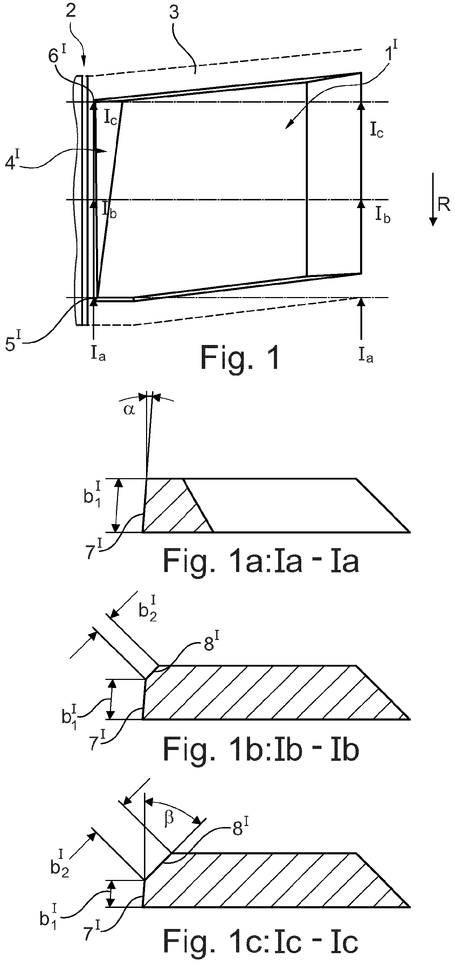

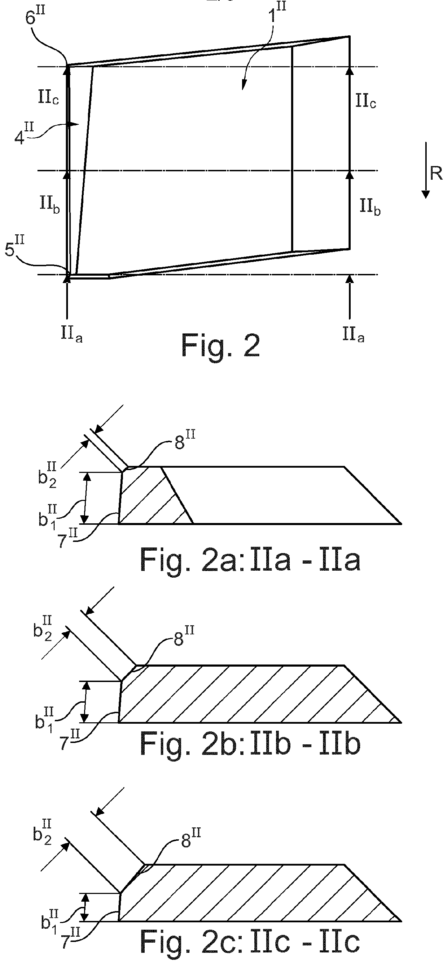

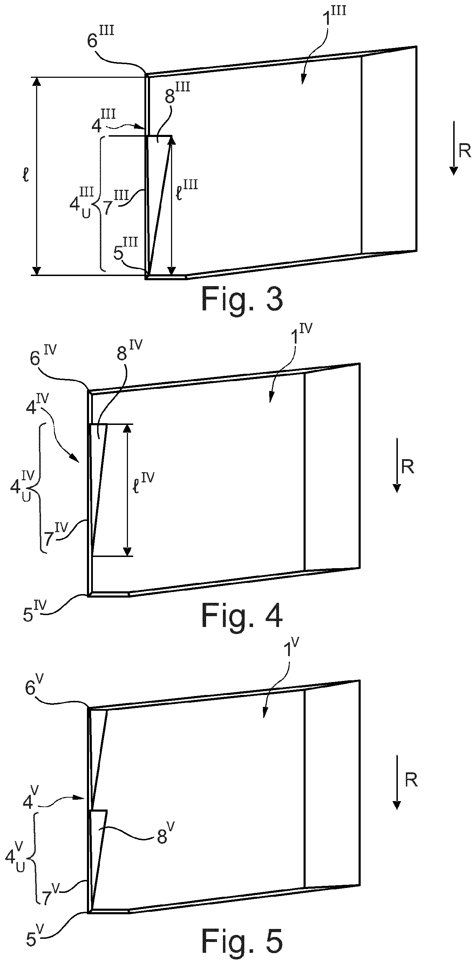

Fig. 1 bis Fig. 5 zeigen jeweils eine vereinfachte Draufsicht auf einen Profilblock 1^{I} (Fig. 1), 1^{II} (Fig. 2), 1^{III} (Fig. 3), 1^{IV} (Fig. 4), 1^{V} (Fig. 5). Der Profilblock 1^{I}, 1^{II}, 1^{III}, 1^{IV}, 1^{V} gehört jeweils zu einer schulterseitigen Profilrippe eines Laufstreifens eines Fahrzeugluftreifens, welche laufstreifeninnenseitig durch eine lediglich in Fig. 1 angedeutete, beispielsweise gerade verlaufende Umfangsrille 2 von weiteren, insbesondere in bekannter Weise gestalteten Profilelementen, beispielsweise einer weiteren Profilrippe, getrennt ist. Die schulterseitige Profilrippe weist in bekannter Weise eine Vielzahl von Profilblöcken 1^{I}, 1^{II}, 1^{III}, 1^{IV}, 1^{V} auf, welche durch, nur in Fig. 1 angedeutete, parallel zueinander und zur axialen Richtung unter einem Winkel von 0° bis zu 45°, insbesondere von bis zu 30°, verlaufende Querrillen 3 voneinander getrennt sind.

Ein gemäß der Erfindung gestalteter Laufstreifen, welcher eine Profilrippe mit Profilblöcken 1^{I}, 1^{II}, 1^{III}, 1^{IV}, 1^{V} aufweist, ist laufrichtungsgebunden ausgeführt, wobei der Fahrzeugluftreifen derart am Fahrzeug zu montieren ist, dass er die in Fig. 1 bis Fig. 5 durch den Pfeil R symbolisierte Abrollrichtung bei Vorwärtsfahrt aufweist. Beispielsweise ist der Laufstreifen, etwa in seinem mittleren Bereich, mit V-förmig bzw. pfeilartig verlaufenden Schräg- bzw. Querrillen versehen, welche die Laufrichtungsgebundenheit des Laufstreifens bewirken.

Jeder Profilblock 1^{I}, 1^{II}, 1^{III}, 1^{IV}, 1^{V} ist zur Umfangsrille 2 (Fig. 1) durch eine sich zwischen den Querrillen 3 erstreckende seitliche Blockflanke 4^{I}, 4^{II}, 4^{III}, 4^{IV}, 4^{V} begrenzt. Die Blockflanke 4^{I}, 4^{II}, 4^{III}, 4^{IV}, 4^{V} weist an der beim Abrollen des Reifens bei Vorwärtsfahrt (Pfeil R) zuerst in die Bodenaufstandsfläche eintretenden Querrille 3 ein einlaufendes Ende 5^{I}, 5^{II}, 5^{III}, S^{IV}, 5^{V} und an der zweiten sie in Umfangsrichtung begrenzenden Querrille 3 ein auslaufendes Ende 6^{I}, 6^{II}, 6^{III}, 6^{IV}, 6^{V} auf.

Bei der in Fig. 1 sowie Fig. 1a bis Fig. 1c gezeigten Variante, setzt sich die den Profilblock 1^{I} zur Umfangsrille 2 begrenzende Blockflanke 4^{I} über ihre gesamte Umfangserstreckung, im Querschnitt und in radialer Richtung betrachtet, aus einem radial inneren Flankenabschnitt 7^{I} und einem das radial äußeren Flankenabschnitt 8^{I} zusammen. Der radial innere Flankenabschnitt 7^{I} verläuft, im Querschnitt betrachtet, zur radialen Richtung unter einem konstanten Winkel α (Fig. 1a) von 0° bis 7°, kann daher auch in radialer Richtung verlaufen, und weist, ebenfalls im Querschnitt betrachtet, eine in Erstreckungsrichtung der Blockflanke 4^{I} und daher in Umfangsrichtung gemessene, vom einlaufenden Ende 5^{I} zum auslaufenden Ende 6^{I} kontinuierlich abnehmende Breite b₁^{I} auf (Fig. 1a bis Fig. 1c). Der radial äußere Flankenabschnitt 8^{I} ist eine eine ebene Schrägfläche bildende Fase und verläuft, im Querschnitt betrachtet, zur radialen Richtung unter einem konstanten Winkel β (Fig. 1b, Fig. 1c) von 40° bis 60°, insbesondere von 43° bis 50°, und weist, im Querschnitt betrachtet, eine vom einlaufenden Ende 5^{I} zum auslaufenden Ende 6^{I} kontinuierlich zunehmende Breite b₂^{I} (Fig. 1, Fig. 1b, Fig. 1c) auf, wobei der radial äußere Flankenabschnitt 8^{I} am einlaufenden Ende 5^{I} ausläuft (Fig. 1). Am auslaufenden Ende 6^{I} weist die Breite b₂^{I} des radial äußeren Flankenabschnittes 8^{I} ihren größten Wert auf, welcher 2,0 mm bis 6,0 mm, insbesondere 4,5 mm bis 5,5 mm, beträgt.

Gemäß der beschriebenen Ausgestaltung ändert sich die Breite b₁^{I} des radial inneren Flankenabschnittes 7^{I} über die Umfangserstreckung der Blockflanke 4^{I} entgegengesetzt zur Breite b₂^{I} des radial äußeren Flankenabschnittes 8^{I}.

Bei der in Fig. 2 sowie Fig. 2a bis Fig. 2c gezeigten Variante, setzt sich die den Profilblock 1^{II} seitlich begrenzende Blockflanke 4^{II}, im Querschnitt und in radialer Richtung betrachtet, aus einem radial inneren Flankenabschnitt 7^{II} und einem radial äußeren Flankenabschnitt 8^{II} zusammen. Die Variante gemäß Fig. 2 unterscheidet sich von jener gemäß Fig. 1 insbesondere dadurch, dass der radial äußere Flankenabschnitt 8^{II} am einlaufenden Ende 5^{II} nicht ausläuft, sondern seine Breite b₂^{II} an dieser Stelle ihren kleinsten Wert von 0,8 mm bis 1,2 mm aufweist. Die Breite b₁^{II} des radial inneren Flankenabschnitt 7^{II} ändert sich entsprechend entgegengesetzt zur Breite b₂^{II} des radial äußeren Flankenabschnittes 8^{II}.

Bei der in Fig. 3 gezeigten Variante setzt sich die den Profilblock 1^{III} seitlich begrenzende Blockflanke 4^{III} im Bereich eines Umfangsabschnittes 4^{III}u aus einem radial inneren Flankenabschnitt 7^{III} und einem radial äußeren Flankenabschnitt 8^{III} zusammen. Der Umfangsabschnitt 4^{III}u grenzt an das einlaufende Ende 5^{III} der Blockflanke 4^{III} an und weist, ermittelt an der Laufstreifenperipherie sowie in Umfangsrichtung, eine Länge 1^{III} auf, welche 50% bis 80% der auf analoge Weise ermittelten Länge 1 der Blockflanke 4^{III} beträgt. Der radial äußere Flankenabschnitt 8^{III} ist gemäß einem Teilstück des bereits beschriebenen radial äußeren Flankenabschnittes 8^{I} (Fig. 1) ausgeführt und läuft daher entsprechend aus. Außerhalb des Umfangsabschnittes 4^{III}u ist die Blockflanke 4^{III}, im Querschnitt betrachtet, gegenüber der radialen Richtung übereinstimmend zum radial inneren Flankenabschnitt 7^{III} geneigt.

Bei der in Fig. 4 gezeigten Variante setzt sich die Blockflanke 4^{IV} in einem mittleren Umfangsabschnitt 4^{IV}u aus einem radial inneren Flankenabschnitt 7^{IV} und einem radial äußeren Flankenabschnitt 8^{IV} zusammen. Der Umfangsabschnitt 4^{IV}u weist eine Länge l^{IV} auf, welche analog zur Länge l^{III} ermittelt ist und ein zu dieser übereinstimmende Größe aufweist. Außerhalb des Umfangsabschnittes 4^{IV}u ist die Blockflanke 4^{IV}, im Querschnitt betrachtet, gegenüber der radialen Richtung übereinstimmend zum radial inneren Flankenabschnitt 7^{IV} geneigt.

Bei der in Fig. 5 gezeigten Variante setzt sich die Blockflanke 4^{V} in Umfangsrichtung aus zwei übereinstimmend ausgeführten Umfangsabschnitten 4^{V}u zusammen. Jeder Umfangsabschnitt 4^{V}u setzt sich in radialer Richtung aus einem radial inneren Flankenabschnitt 7^{V} und einem radial äußeren Flankenabschnitt 8^{V} zusammen, welche analog zu den in Fig. 1, Fig. 3 bzw. Fig. 4 gezeigten Flankenabschnitten 7^{I}, 7^{III}, 7^{IV} bzw. 8^{I}, 8^{III}, 8^{IV} ausgeführt sind.

Die Erfindung ist auf die beschriebenen Ausführungsvarianten nicht beschränkt.

Ferner können die seitlichen Blockflanken auch an profilblockartig gestalteten Profilrippen vorgesehen sein, welche sacknutartig innerhalb einer Profilrippe endende Querrillen aufweisen. Die Rillen, welche in den Profilrippen verlaufen, können ferner unter einem Winkel größer 45° zur axialen Richtung verlaufende Schrägrillen sein. Zusätzlich können die Profilblöcke mit Einschnitten versehen sein.

### Bezugsziffernliste

- 1^{I}, 1^{II}, 1^{III}, 1^{IV}, 1^{V}: Profilblock
- 2: Umfangsrille
- 3: Querrille
- 4^{I}, 4^{II}, 4^{III}, 4^{IV}, 4^{V}: Blockflanke
- 4^{III}u: Umfangsabschnitt
- 4^{IV}u: mittlerer Umfangsabschnitt
- 4^{V}u: Umfangsabschnitt
- 5^{I}, 5^{II}, 5^{III}, 5^{IV}, 5^{V}: einlaufendes Ende
- 6^{I}, 6^{II}, 6^{III}, 6^{IV}, 6^{V}: auslaufendes Ende
- 7^{I}, 7^{II}, 7^{III}, 7^{IV}, 7^{V}: radial innerer Flankenabschnitt
- 8^{I}, 8^{II}, 8^{III}, 8^{IV}, 8^{V}: radial äußerer Flankenabschnitt
- b₁^{I}, b₂^{I}, b_{I}^{II}, b₂¹¹: Breite
- 1^{III}, 1^{IV}: Länge
- α, β: Winkel
- R: Pfeil (Abrollrichtung)

## Patentansprüche

1. Fahrzeugluftreifen mit einem laufrichtungsgebunden ausgeführten Laufstreifen mit zumindest einer an einer Seite von einer Umfangsrille (2) begrenzten schulterseitigen Profilrippe, welche durch eine Vielzahl von parallel zueinander verlaufenden, in die Umfangsrille (2) einmündenden Querrillen (3) und/oder Schrägrillen in Profilblöcke (1^{I}, 1^{II}, 1^{III}, 1^{IV}, 1^{V}) gegliedert ist, welche an der Umfangsrille (2) jeweils durch eine Blockflanke (4^{I}, 4^{II}, 4^{III}, 4^{IV}, 4^{V}) mit einem beim Abrollen des Reifens bei Vorwärtsfahrt (R) zuerst in den Untergrund eintretenden, einlaufenden Ende (5^{I}, 5^{II}, 5^{III}, S^{IV}, 5^{V}) und einem auslaufenden Ende (6^{I}, 6^{II}, 6^{III}, 6^{IV}, 6^{V}) begrenzt sind,
wobei sich die Blockflanke (4^{I}, 4^{II}, 4^{III}, 4^{IV}, 4^{V}), im Querschnitt und in radialer Richtung betrachtet, entweder in einem einzigen Umfangsabschnitt (4^{III}u, 4^{IV}u) aus einem radial inneren Flankenabschnitt (7^{III}, 7^{IV}) und einem radial äußeren Flankenabschnitt (8^{III}, 8^{IV}) zusammensetzt oder in zwei übereinstimmend ausgeführten Umfangsabschnitten (4^{V}u) jeweils aus einem radial inneren Flankenabschnitt (7^{V}) und einem radial äußeren Flankenabschnitt (8^{V}) zusammensetzt oder über ihre gesamte Umfangserstreckung aus einem radial inneren Flankenabschnitt (7^{I}, 7^{II}) und einem radial äußeren Flankenabschnitt (8^{I}, 8^{II}) zusammensetzt,
wobei der radial innere Flankenabschnitt (7^{I}, 7^{II}, 7^{III}, 7^{IV}, 7^{V}) zur radialen Richtung unter einem konstanten Winkel (α) von 0° bis 7° verläuft und der radial äußere Flankenabschnitt (8^{I}, 8^{II}, 8^{III}, 8^{IV}, 8^{V}) zur radialen Richtung unter einem konstanten Winkel (β) von 40° bis 60° verläuft,
**dadurch gekennzeichnet,**
**dass** die Breite (b₂^{I}, b₂^{II}) des bzw. jedes radial äußeren Flankenabschnittes (8^{I}, 8^{II}, 8^{III}, 8^{IV}, 8^{V}) der Blockflanke (4^{I}, 4^{II}, 4^{III}, 4^{IV}, 4^{V}) über seine Umfangserstreckung in Richtung zum auslaufenden Ende (6^{I}, 6^{II}, 6^{III}, 6^{IV}, 6^{V}) der Blockflanke (4^{I}, 4^{II}, 4^{III}, 4^{IV}, 4^{V}) kontinuierlich zunimmt.

2. Fahrzeugluftreifen nach Anspruch 1, **dadurch gekennzeichnet, dass** der Winkel (β), unter welchem der radial äußere Flankenabschnitt (8^{I}, 8^{II}, 8^{III}, 8^{IV}, 8^{V}) verläuft, 43° bis 50° beträgt.

3. Fahrzeugluftreifen nach Anspruch 1 oder 2, **dadurch gekennzeichnet, dass** der Umfangsabschnitt (4^{III}u, 4^{IV}u, 4^{V}u), in welchem sich die Blockflanke (4^{III}, 4^{IV}, 4^{V}) aus dem radial inneren und dem radial äußeren Flankenabschnitt (7^{III}, 7^{IV}, 7^{V}, 8^{III}, 8^{IV}, 8^{V}) zusammensetzt, eine Länge (l^{III}, l^{IV}) aufweist, welche 50% bis 80% der Länge (1) der Blockflanke (4^{III}, 4^{IV}, 4^{V}) beträgt, wobei die Längen (1^{III}, 1^{IV}, 1) an der Laufstreifenperipherie und in Umfangsrichtung ermittelt sind.

4. Fahrzeugluftreifen nach einem der Ansprüche 1 bis 3, **dadurch gekennzeichnet, dass** der radial äußere Flankenabschnitt (8^{I}, 8^{III}, 8^{IV}, 8^{V}) an jenem seiner beiden in Umfangsrichtung liegenden Enden, welches sich näher zum bzw. am einlaufenden Ende (5^{I}, 5^{III}, 5^{IV}, 5^{V}) der Blockflanke (4^{I}, 4^{III}, 4^{IV}, 4^{V}) befindet, ausläuft.

5. Fahrzeugluftreifen nach einem der Ansprüche 1 bis 4, **dadurch gekennzeichnet, dass** die Breite (b₂^{I}, b₂^{II}) des radial äußeren Flankenabschnittes (8^{I}, 8^{II}, 8^{III}, 8^{IV}, 8^{V}) an jenem seiner beiden in Umfangsrichtung liegenden Enden, welches sich näher zum bzw. am einlaufenden Ende (5^{I}, 5^{II}, 5^{III}, 5^{IV}, 5^{V}) der Blockflanke (5) befindet, bis zu 1,2 mm sowie insbesondere mindestens 0,8 mm beträgt.

6. Fahrzeugluftreifen nach einem der Ansprüche 1 bis 5, **dadurch gekennzeichnet, dass** die Breite (b₂^{I}, b₂^{II}) des radial äußeren Flankenabschnittes (8^{I}, 8^{II}, 8^{III}, 8^{IV}, 8^{V}) an jenem seiner beiden in Umfangsrichtung liegenden Enden, welches sich näher zum bzw. am auslaufenden Ende (6^{I}, 6^{II}, 6^{III}, 6^{IV}, 6^{V}) der Blockflanke (4^{I}, 4^{II}, 4^{III}, 4^{IV}, 4^{V}) befindet, 2,0 mm bis 6,0 mm, insbesondere 4,5 mm bis 5,5 mm, beträgt.

## Claims

1. Vehicle pneumatic tyre with a tread strip of directional configuration with at least one shoulder-side profile rib which is delimited on one side by a circumferential groove (2) and is divided into tread bars (1^{I}, 1^{II}, 1^{III}, 1^{IV}, 1^{V}) by way of a multiplicity of oblique grooves and/or transverse grooves (3) which run parallel to one another and open into the circumferential groove (2), which tread bars (1^{I}, 1^{II}, 1^{III}, 1^{IV}, 1^{V}) are delimited on the circumferential groove (2) in each case by way of a bar flank (4^{I}, 4^{II}, 4^{III}, 4^{IV}, 4^{V}) with a leading end (5^{I}, 5^{II}, 5^{III}, 5^{IV}, 5^{V}) which enters the underlying surface first during rolling of the tyre in the case of forward driving (R), and a trailing end (6^{I}, 6^{II}, 6^{III}, 6^{IV}, 6^{V}), the bar flanks (4^{I}, 4^{II}, 4^{III}, 4^{IV}, 4^{V}), as viewed in cross section and in the radial direction,
being composed either in a single circumferential section (4^{III}u, 4^{IV}u) of a radially inner flank section (7^{III}, 7^{IV}) and a radially outer flank section (8^{III}, 8^{IV}), or being composed in two circumferential sections (4^{V}u) of corresponding configuration in each case of a radially inner flank section (7^{V}) and a radially outer flank section (8^{V}), or being composed over their entire circumferential extent of a radially inner flank section (7^{I}, 7^{II}) and a radially outer flank section (8^{I}, 8^{II}), the radial inner flank section (7^{I}, 7^{II}, 7^{III}, 7^{IV}, 7^{V}) running at a constant angle (α) of from 0° to 7° with respect to the radial direction, and the radially outer flank section (8^{I}, 8^{II}, 8^{III}, 8^{IV}, 8^{V}) running at a constant angle (β) of from 40° to 60° with respect to the radial direction,
**characterized in that**
the width (b₂^{I}, b₂^{II}) of the or each radially outer flank section (8^{I}, 8^{II}, 8^{III}, 8^{IV}, 8^{V}) of the bar flank (4^{I}, 4^{II}, 4^{III}, 4^{IV}, 4^{V}) increases continuously over its circumferential extent in the direction of the trailing end (6^{I}, 6^{II}, 6^{III}, 6^{IV}, 6^{V}) of the bar flank (4^{I}, 4^{II}, 4^{III}, 4^{IV}, 4^{V}).

2. Vehicle pneumatic tyre according to Claim 1, **characterized in that** the angle (β), at which the radially outer flank section (8^{I}, 8^{II}, 8^{III}, 8^{IV}, 8^{V}) runs, is from 43° to 50°.

3. Vehicle pneumatic tyre according to Claim 1 or 2, **characterized in that** the circumferential section (4^{III}u, 4^{IV}u, ^{4V}u), in which the bar flank (4^{III}, 4^{IV}, 4^{V}) is composed of the radially inner and the radially outer flank section (7^{III}, 7^{IV}, 7^{V}, 8^{III}, 8^{IV}, 8^{V}), has a length (l^{III}, l^{IV}) which is from 50% to 80% of the length (1) of the bar flank (4^{III}, 4^{IV}, 4^{V}), the lengths (l^{III}, l^{IV}, l) being determined on the tread strip periphery and in the circumferential direction.

4. Vehicle pneumatic tyre according to one of Claims 1 to 3, **characterized in that** the radially outer flank section (8^{I}, 8^{III}, 8^{IV}, 8^{V}) ends at that one of its two ends lying in the circumferential direction which is situated closer to or at the leading end (5^{I}, 5^{III}, 5^{IV}, 5^{V}) of the bar flank (4^{I}, 4^{III}, 4^{IV}, 4^{V}).

5. Vehicle pneumatic tyre according to one of Claims 1 to 4, **characterized in that** the width (b₂^{I}, b₂^{II}) of the radially outer flank section (8^{I}, 8^{II}, 8^{III}, 8^{IV}, 8^{V}) is up to 1.2 mm and, in particular, at least 0.8 mm at that one of its two ends lying in the circumferential direction which is situated closer to or at the leading end (5^{I}, 5^{III}, 5^{IV}, 5^{V}) of the bar flank (5) .

6. Vehicle pneumatic tyre according to one of Claims 1 to 5, **characterized in that** the width (b₂^{I}, b₂^{II}) of the radially outer flank section (8^{I}, 8^{II}, 8^{III}, 8^{IV}, 8^{V}) is from 2.0 mm to 6.0 mm and, in particular, from 4.5 mm to 5.5 mm at that one of its two ends lying in the circumferential direction which is situated closer to or at the trailing end (6^{I}, 6^{II}, 6^{III}, 6^{IV}, 6^{V}) of the bar flank (4^{I}, 4^{II}, 4^{III}, 4^{IV}, 4^{V}).

## Revendications

1. Pneumatique de véhicule muni d'une bande de roulement directionnelle avec au moins une nervure profilée côté épaulement délimitée d'un côté par une rainure circonférentielle (2), qui est divisée par une pluralité de rainures transversales (3) et/ou de rainures obliques, parallèles les unes aux autres, débouchant dans la rainure circonférentielle (2), dans des blocs profilés (1^{I}, 1^{II}, 1^{III}, 1^{IV}, 1^{V}), qui sont délimitées au niveau de la rainure circonférentielle (2) à chaque fois par un flanc de bloc (4^{I}, 4^{II}, 4^{III}, 4^{IV}, 4^{V}) ayant une extrémité entrante (5^{I}, 5^{II}, 5^{III}, 5^{IV}, 5^{V}), pénétrant en premier dans le sol lors du roulement du pneu en marche avant (R), et une extrémité sortante (6^{I}, 6^{II}, 6^{III}, 6^{IV}, 6^{V}),
le flanc de bloc (4^{I}, 4^{II}, 4^{III}, 4^{IV}, 4^{V}), considéré dans la section transversale et dans la direction radiale, soit se composant dans une section circonférentielle unique (4^{III}u, 4^{IV}u) d'une section de flanc radialement intérieure (7^{III}, 7^{IV}) et d'une section de flanc radialement extérieure (8^{III}, 8^{IV}), soit se composant dans deux sections circonférentielles coïncidentes (4^{V}u) à chaque fois d'une section de flanc radialement intérieure (7^{V}) et d'une section de flanc radialement extérieure (8^{V}), soit se composant sur son étendue circonférentielle totale d'une section de flanc radialement intérieure (7^{I}, 7^{II}) et d'une section de flanc radialement extérieure (8^{I}, 8^{II}),
la section de flanc radialement intérieure (7^{I}, 7^{II}, 7^{III}, 7^{IV}, 7^{V}) s'étendant à un angle (α) constant de 0° à 7° par rapport à la direction radiale et la section de flanc radialement extérieure (8^{I}, 8^{II}, 8^{III}, 8^{IV}, 8^{V}) s'étendant à un angle (β) constant de 40° à 60° par rapport à la direction radiale,
**caractérisé en ce que**
la largeur (b₂^{I}, b₂^{II}) de la ou de chaque section de flanc radialement extérieure (8^{I}, 8^{II}, 8^{III}, 8^{IV}, 8^{V}) du flanc de bloc (4^{I}, 4^{II}, 4^{III}, 4^{IV}, 4^{V}) augmente en continu sur son étendue circonférentielle en direction de l'extrémité sortante (6^{I}, 6^{II}, 6^{III}, 6^{IV}, 6^{V}) du flanc de bloc (4^{I}, 4^{II}, 4^{III}, 4^{IV}, 4^{V}).

2. Pneumatique de véhicule selon la revendication 1, **caractérisé en ce que** l'angle (β), avec lequel la section de flanc radialement extérieure (8^{I}, 8^{II}, 8^{III}, 8^{IV}, 8^{V}) s'étend, est de 43° à 50°.

3. Pneumatique de véhicule selon la revendication 1 ou 2, **caractérisé en ce que** la section circonférentielle (4^{III}u, 4^{IV}u, 4^{V}u), dans laquelle le flanc de bloc (4^{III}, 4^{IV}, 4^{V}) se compose de la section de flanc radialement intérieure et de la section de flanc radialement extérieure (7^{III}, 7^{IV}, 7^{V}, 8^{III}, 8^{IV}, 8^{V}), présente une longueur (l^{III}, l^{IV}), qui est de 50 % à 80 % de la longueur (l) du flanc de bloc (4^{III}, 4^{IV}, 4^{V}), les longueurs (l^{III}, l^{IV}, l) étant déterminées sur la périphérie de la bande de roulement et dans la direction circonférentielle.

4. Pneumatique de véhicule selon l'une quelconque des revendications 1 à 3, **caractérisé en ce que** la section de flanc radialement extérieure (8^{I}, 8^{III}, 8^{IV}, 8^{V}) prend fin au niveau de celle de ses deux extrémités dans la direction circonférentielle qui se trouve le plus près de ou au niveau de l'extrémité entrante (5^{I}, 5^{III}, 5^{IV}, 5^{V}) du flanc de bloc (4^{I}, 4^{III}, 4^{IV}, 4^{V}).

5. Pneumatique de véhicule selon l'une quelconque des revendications 1 à 4, **caractérisé en ce que** la largeur (b₂^{I}, b₂^{II}) de la section de flanc radialement extérieure (8^{I}, 8^{II}, 8^{III}, 8^{IV}, 8^{V}) au niveau de celle de ses deux extrémités dans la direction circonférentielle qui se trouve le plus près de ou au niveau de l'extrémité entrante (5^{I}, 5^{II}, 5^{III}, 5^{IV}, 5^{V}) du flanc de bord (5) est de jusqu'à 1,2 mm, ainsi que notamment d'au moins 0,8 mm.

6. Pneumatique de véhicule selon l'une quelconque des revendications 1 à 5, **caractérisé en ce que** la largeur (b₂^{I}, b₂^{II}) de la section de flanc radialement extérieure (8^{I}, 8^{II}, 8^{III}, 8^{IV}, 8^{V}) au niveau de celle de ses deux extrémités dans la direction circonférentielle qui se trouve le plus près de ou au niveau de l'extrémité sortante (6^{I}, 6^{II}, 6^{III}, 6^{IV}, 6^{V}) du flanc de bord (4^{I}, 4^{II}, 4^{III}, 4^{IV}, 4^{V}) est de 2,0 mm à 6,0 mm, notamment de 4,5 mm à 5,5 mm.
